# EUROPÄISCHE PATENTSCHRIFT

(11) **EP 1 929 231 B1**
(45) Veröffentlichungstag und Bekanntmachung des Hinweises auf die Patenterteilung: **01.08.2018**
(21) Anmeldenummer: 06805707.4
(22) Anmeldetag: 14.09.2006
(51) Int. Cl.: F28D 7/16, F28F 1/04, F28F 9/18

(54) **WÄRMEÜBERTRAGER, INSBESONDERE ABGASWÄRMEÜBERTRAGER FÜR KRAFTFAHRZEUGE**
HEAT EXCHANGER, IN PARTICULAR EXHAUST GAS HEAT EXCHANGER FOR MOTOR VEHICLES
ÉCHANGEUR DE CHALEUR, NOTAMMENT ÉCHANGEUR DE CHALEUR DE GAZ D'ÉCHAPPEMENT DE VÉHICULES AUTOMOBILES

(30) Priorität: 16.09.2005 DE 102005044290
(43) Veröffentlichungstag der Anmeldung: 11.06.2008
(73) Patentinhaber: MAHLE Behr GmbH & Co. KG, 70469 Stuttgart (DE)
(72) Erfinder: GESKES, Peter, 73760 Ostfildern (DE)
(74) Vertreter: Grauel, Andreas
(86) Internationale Anmeldenummer: PCT/EP2006/008940
(87) Internationale Veröffentlichungsnummer: WO 2007/031306

(56) Entgegenhaltungen:
- EP-A1- 0 076 724
- WO-A-2004/065874
- CH-A- 378 353
- DE-A1- 1 551 448
- DE-A1- 19 654 368
- JP-A- 11 023 182
- JP-A- 2002 168 586
- US-A- 4 206 806
- US-A1- 2005 067 153

## Beschreibung

Die Erfindung betrifft einen Wärmeübertrager, insbesondere einen Abgaswärmeübertrager für Kraftfahrzeuge sowie ein Verfahren zur Herstellung des Wärmeübertragers. Wärmeübertrager, die als Abgaskühler bei der Abgasrückführung in Kraftfahrzeugen eingesetzt werden, sind in verschiedenen Ausführungen bekannt, beispielsweise als Schweiß- oder als Lötkonstruktionen. Durch die DE 199 07 163 C2 der Anmelderin wurde ein geschweißter Abgaswärmeübertrager aus Edelstahl bekannt, bei welchem ein Bündel von Abgasrohren in Rohrböden eingeschweißt und in einem von flüssigem Kühlmittel durchströmbaren Gehäusemantel angeordnet ist. Diese Bauweise ist insbesondere wegen der diversen Schweiß- bzw. Laserschweißverbindungen relativ kostenaufwändig. Durch die EP 0 677 715 A1 der Anmelderin wurde ein Abgaswärmeübertrager bekannt, dessen Einzelteile durch Löten miteinander verbunden werden. Nachteilig hierbei ist wegen der Vielzahl der Einzelteile das Fügen, Positionieren und Fixieren der Einzelteile zur Vorbereitung auf den Lötprozess

Dokument WO2004/065874 offenbart einen Wärmeübertrager mit Flachrohren, welche in einem Gehäusemantel angeordnet sind. Die Rohrenden sind mit Rohrböden verlötet.

Es ist Aufgabe der vorliegenden Erfindung, einen Wärmeübertrager der eingangs genannten Art lötgerecht auszubilden, so dass er kostengünstig durch Löten, möglichst in einem Arbeitsgang herstellbar ist. Es ist auch Aufgabe der Erfindung, ein kostengünstiges Verfahren zur Herstellung eines gelöteten Wärmeübertragers anzugeben.

Diese Aufgabe wird durch die Merkmale des Patentanspruches 1 gelöst. Vorteilhafte Ausgestaltungen der Erfindung ergeben sich aus den Unteransprüchen.

Erfindungsgemäß ist vorgesehen, dass die als Flachrohre ausgebildeten Abgasrohre zumindest an einer Seite aufgeweitet werden, und zwar zu einem rechteckförmigen Querschnitt, so dass die Rohrenden mit ihren Längsseiten aneinander liegen und dort verlötbar sind. Über die aufgeweiteten, nebeneinander angeordneten Rohrenden wird ein Rohrboden gesteckt, welcher als Tiefziehteil ausgebildet ist und rechteckförmige Durchzüge in Form der Rohrenden aufweist, wobei die Durchzüge in die Rohrenden eingreifen. Die Rohrenden sind mit dem Rohrboden dicht verlötbar, ebenso wird der Rohrboden mit dem Gehäusemantel verlötet. Die andere Seite des Rohrbündels kann entweder in der gleichen Weise, d. h. mit aufgeweiteten Rohrenden ausgebildet sein oder nicht aufgeweitete Rohrenden aufweisen, welche in einen konventionellen Rohrboden gesteckt und mit diesem verlötet werden. Optional können in die Abgasrohre Turbulenzeinlagen oder Innenwellrippen eingeschoben und mit den Abgasrohren verlötet werden, wobei das Einschieben vorteilhafterweise von der Seite der aufgeweiteten Rohrenden her erfolgt. Durch die trichterförmige Aufweitung der Rohrenden wird das Einschieben erheblich erleichtert, so dass auch eine automatisierte Fertigung möglich ist. Vorteilhaft bei der erfindungsgemäßen Lötkonstruktion ist, dass sich die Rohre einfach "kassettieren", d. h. aufeinander schichten und mit den Rohrböden verbinden lassen. Ferner können Gehäusemantel und Anschlussstutzen (Diffusoren) einfach mit dem Rohrbündel und den Rohrböden positioniert und fixiert, d. h. für den Lötprozess vorbereitet werden. Somit ist eine Komplettlötung des gesamten Wärmeübertragers in einem Arbeitsgang möglich. Dies reduziert die Herstellungskosten des Wärmeübertragers. Ferner ergibt sich der Vorteil, dass die aufgeweiteten Rohrenden eine thermisch bedingte Dehnung der Rohre gegenüber dem Gehäusemantel zulassen. Die aufgeweiteten Rohrenden wirken quasi als Dehnungssicke. Damit wird ein Brechen bzw. Undichtwerden der Lötnähte, insbesondere im Rohrbodenbereich verhindert.

Die Rohre, welche einen flachen rechteckförmigen Querschnitt aufweisen, können auf verschiedene Art hergestellt werden, beispielsweise als längsnahtgeschweißte Rohre mit einer oder zwei sich gegenüber liegenden Längsnähten. Ferner ist eine Rohrherstellung mit einer oder zwei gelöteten Längsnähten, z. B. als Falz möglich. In diesem Falle kann die Lötung in einem Arbeitsgang mit der Lötung des gesamten Wärmeübertragers erfolgen. Für die Verbindung der Teile untereinander sind Lotfolien oder Lotplattierungen an geeigneter Stelle vorgesehen. Anstelle der eingeschobenen Turbulenzeinrichtungen können die Rohre, d. h. deren Blechwandungen auch eingeprägte Strukturelemente, z. B. in Form von so genannten Winglets aufweisen.

Die Aufgabe der Erfindung wird auch durch ein Verfahren mit den Merkmalen des Patentanspruches 9 gelöst. Vorteilhaft bei diesem Verfahren ist, dass die Flachrohre einfach kassettiert, die Rippen einfach eingeschoben werden können und der gesamte Wärmeübertrager ohne weitere Hilfsmittel zum Löten in einem Arbeitsgang vorbereitet werden kann. Dieses einfache Verfahren senkt die Herstellkosten des Wärmeübertragers, welcher besonders vorteilhaft als Abgaswärmeübertrager oder Ladeluftkühler, jeweils flüssigkeitsgekühlt, verwendbar ist.

Ausführungsbeispiele der Erfindung sind in der Zeichnung dargestellt und werden im Folgenden näher beschrieben. Es zeigen
- Fig. 1: einen gelöteten Abgaskühler mit beidseitig aufgeweiteten Rohrenden im Längsschnitt,
- Fig. 2: einen Rohrboden,
- Fig. 3a - 3f: verschiedene Ausführungen von Rechteckquerschnitten von Abgasrohren,
- Fig. 4: eine abgewandelte Ausführungsform eines Abgaskühlers mit nur einseitig aufgeweiteten Rohrenden,
- Fig. 5: ein einzelnes Abgasrohr mit aufgeweiteten Rohrenden und
- Fig. 6: eine Innenwellrippe zum Einschieben in das Abgasrohr gemäß Fig. 5.

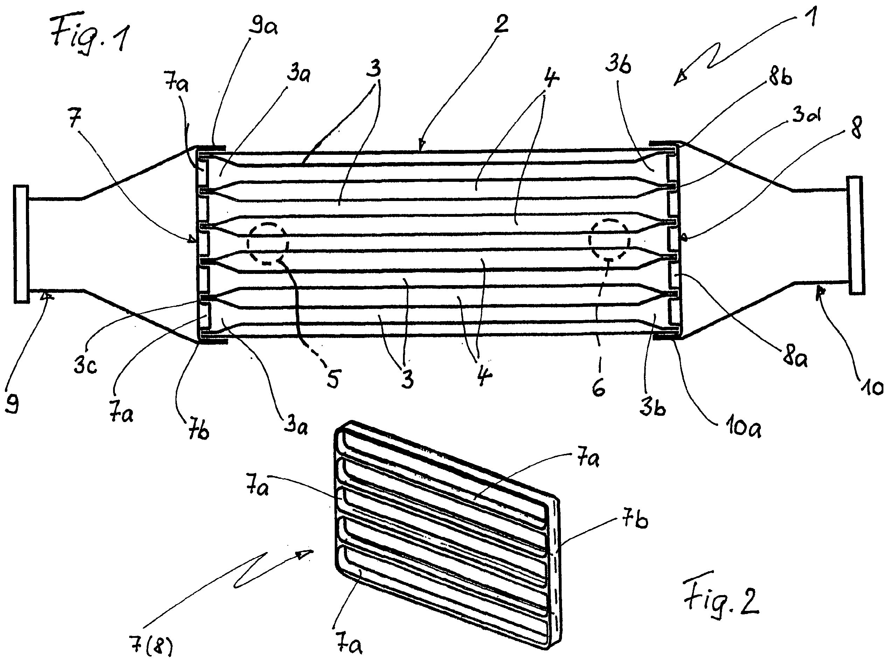

**Fig. 1** zeigt einen als Abgaskühler 1 ausgebildeten Wärmeübertrager, wie er beispielsweise in der Abgasrückführung für Kraftfahrzeuge verwendbar ist. Die Kühlung des Abgases erfolgt dabei durch ein flüssiges Kühlmittel, welches einem nicht dargestellten Kühlkreislauf der Brennkraftmaschine des Kraftfahrzeuges entnehmbar ist. Der Abgaskühler 1 weist einen Gehäusemantel 2 auf, in welchem mehrere Abgasrohre 3, d. h. von Abgas durchströmbare Rohre derart angeordnet sind, dass zwischen ihnen Spalte 4 verbleiben, welche von Kühlmittel durchströmt werden. Kühlmittelanschlüsse 5, 6 sind gestrichelt angedeutet und befinden sich im Gehäusemantel 2. Die Abgasrohre 3 sind an beiden Enden zu trichter- und rechteckförmigen Rohrenden 3a, 3b aufgeweitet. Benachbarte Rohrenden 3a, 3b liegen jeweils an ihren flachen Längsseiten 3c, 3d dicht aneinander an und bilden dort jeweils einen Lötspalt. Die Rohrenden 3a, 3b sind in Rohrböden 7, 8 gehalten und mit diesen verlötet. Die Rohrböden 7, 8 sind vorzugsweise als Tiefziehteile ausgebildet und werden auf die Rohrenden 3a, 3b aufgesteckt. Die Rohrböden 7, 8 weisen Durchzüge 7a, 8a in Anzahl und Form der Rohrenden 3a, 3b auf, so dass jeweils ein Durchzug 7a, 8a in ein aufgeweitetes Rohrende 3a, 3b eingreift und sich an dessen Innenseite zur Bildung eines Lötspaltes anlegt. Ferner weisen die Rohrböden 7, 8 einen umlaufenden hochgestellten Rand 7b, 8b auf, welcher den Gehäusemantel 2 stirnseitig umfasst und damit ebenfalls einen Lötspalt bildet. An die Rohrböden 7, 8 schließen ein Abgaseintrittsstutzen (Diffusor) 9 und ein Austrittsstutzen 10 an. Letztere weisen jeweils einen umlaufenden Randbereich 9a, 10a auf, welcher den Rand 7b, 8b der Rohrböden 7, 8 umgreift und mit diesen einen Lötspalt bildet. Somit können alle erwähnten Teile eindeutig zueinander positioniert und fixiert werden, so dass eine anschließende Lötung in einem nicht dargestellten Lötofen möglich ist. Hierfür sind an den zu verlötenden Stellen nicht dargestellte Lotmaterialien zu deponieren, z. B. in Form von Lotfolien oder Lotplattierungen. Der Abgaskühler 1 wird vorzugsweise aus Edelstahl hergestellt - aufgrund der aggressiven Abgase - wobei zur Verlötung z. B. Nickelbasislote zur Anwendung kommen können.

**Fig. 2** zeigt den Rohrboden 7 bzw. 8 als Einzelteil. Der Rohrboden 7 ist als Tiefziehteil hergestellt und weist in seinem inneren Bereich eine Reihe von Durchzügen 7a auf, welche die Form der aufgeweiteten Rohrenden 3a bzw. 3b aufweisen, jedoch im Querschnitt etwas kleiner ausgebildet sind, so dass die Durchzüge 7a in die aufgeweiteten Rohrenden 3a (wie in Fig. 1 dargestellt) einsteckbar sind. Damit werden die aufgeweiteten Rohrenden 3a, 3b einerseits sicher gehalten und erhalten andererseits einen Erosionsschutz gegen das anströmende Abgas. Der äußere Rand 7b entspricht im Querschnitt dem des Gehäusemantels 2, so dass sich eine enge Anlage an diesen ergibt. Durch die Durchzüge 7a, welche sich auch in den Eckradien an die Innenseite der aufgeweiteten Rohrenden 3a anschmiegen, ergibt sich eine sichere und dichte Verlötung.

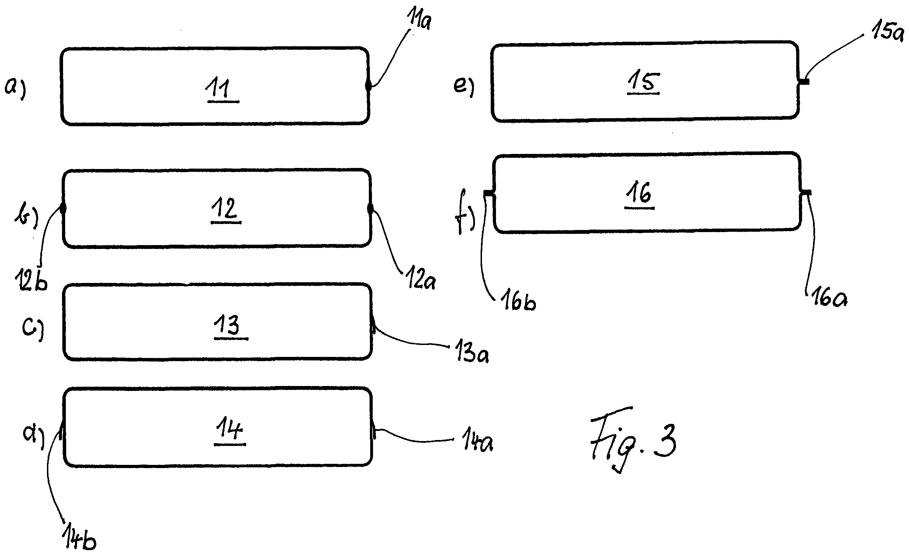

**Fig. 3** zeigt verschiedene Ausführungsbeispiele a) bis f) für Flachrohrquerschnitte von Abgasrohren. Ausführung a) zeigt einen Rechteckquerschnitt mit einer geschweißten Längsnaht 11a, Ausführung b) zeigt einen Rechteckquerschnitt 12 mit zwei sich gegenüber liegenden geschweißten Längsnähten 12a, 12b. Ausführung c) zeigt einen Rechteckquerschnitt 13 für ein Abgasrohr, welches einen seitlichen Lötfalz 13a an der Schmalseite aufweist. Die Ausführung d) zeigt einen Rechteckquerschnitt 14 mit zwei sich gegenüber liegenden Lötnähten 14a, 14b auf den Schmalseiten. Ausführung e) zeigt einen Rechteckquerschnitt 15 mit einer gelöteten Längsnaht 15a, bei welcher ein seitlich abstehender Falz gebildet ist. Ausführung f) zeigt einen Rechteckquerschnitt 16 mit zwei gelöteten, sich gegenüber liegenden Längsfalzen 16a, 16b - der Gesamtquerschnitt ist somit aus zwei Halbschalen aufgebaut. Wie bereits erwähnt, kann die Lötung der Querschnitte 13, 14, 15, 16 gleichzeitig mit der Lötung des gesamten Wärmeübertragers erfolgen.

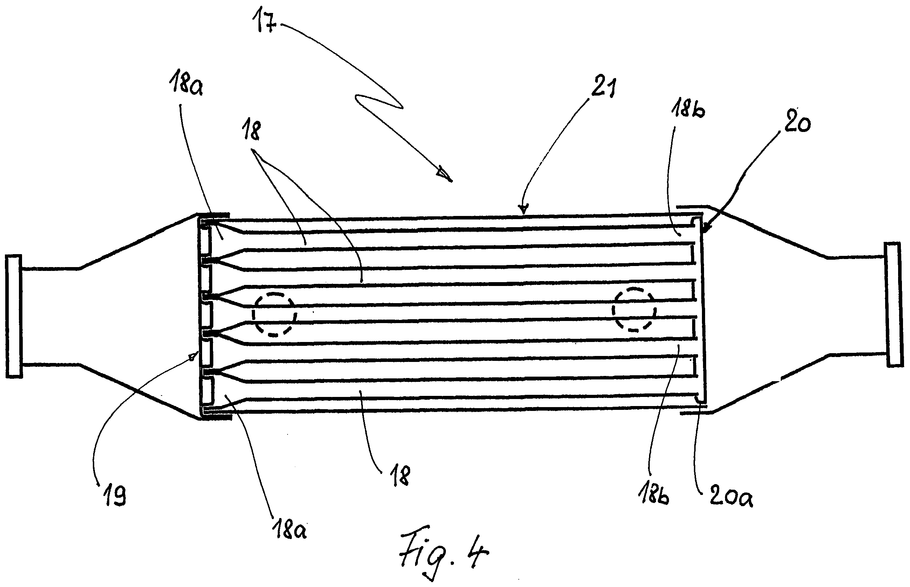

**Fig. 4** zeigt eine abgewandelte Ausführungsform der Erfindung, wobei lediglich eine Seite der Abgasrohre aufgeweitet ist. Der Abgaskühler 17 weist Abgasrohre 18, ebenfalls mit rechteckförmigem Querschnitt auf, welche an einer Seite zu trichterförmigen Rohrenden 18a aufgeweitet sind, während die Rohrenden 18b auf der entgegengesetzten Seite nicht aufgeweitet sind. Auf die aufgeweiteten Rohrenden 18a ist ein Rohrboden 19 aufgesteckt, welcher in seiner Ausbildung dem Ausführungsbeispiel gemäß Fig. 1 und 2 entspricht. Die nicht aufgeweiteten Rohrenden 18b werden von einem Rohrboden 20 aufgenommen, welcher einen umlaufenden hochstehenden Rand 20a aufweist, welcher an der Innenseite des Gehäusemantels 21 anliegt - der Rohrboden 20 wird also in den Gehäusemantel 21 eingeschoben. Die Rohrenden 18b sind in an sich bekannter Weise im Rohrboden 20 aufgenommen und werden eingelötet. Ansonsten entspricht der dargestellte Abgaskühler 17 dem Ausführungsbeispiel gemäß Fig. 1

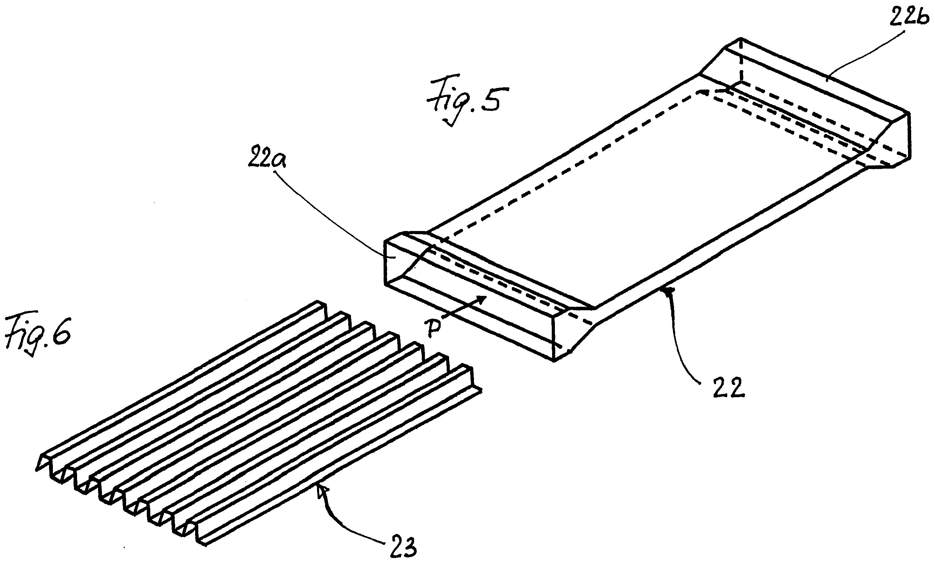

**Fig. 5** zeigt ein einzelnes Abgasrohr 22 mit einem flachen Rechteckquerschnitt und mit beiderseits rechteckförmig aufgeweiteten Rohrenden 22a, 22b.

**Fig. 6** zeigt eine im Querschnitt etwa trapezförmig ausgebildete Innenwellrippe 23, welche in Richtung des Pfeiles P in das Abgasrohr 22 einschiebbar und derart bemessen ist, dass sie mit ihren Wellenbergen an der Innenwandung des Abgasrohres 22 anliegt und mit diesen verlötbar ist. Entsprechendes (nicht dargestelltes) Lotmaterial muss daher deponiert werden. Die In nenwellrippe 23 erhöht einerseits den Wärmeübergang des Abgases auf der Rohrinnenseite und verleiht dem Rohr andererseits eine höhere Innendruckfestigkeit. Abweichend von der dargestellten Wellrippe 23 kann auch eine so genannte Stegrippe mit versetzten Flanken oder ein so genanntes Turbulenzblech in das Abgasrohr 22 eingeschoben werden. Die trichterförmige Aufweitung des Rohrendes 22a erleichtert das Einschieben und ermöglicht auch eine automatisierte Fertigung.

Der in den **Figuren 1** **und** **4** dargestellte Wärmeübertrager ist ein Abgaskühler und/oder ein Ladeluftkühler und/oder ein Kühlmittelkühler und/oder ein Ölkühler und/oder ein Kondensator für eine Klimaanlage und/oder ein Gaskühler einer Klimaanlage und/oder ein Verdampfer einer Klimaanlage.

Der in den Figuren 1 und 4 dargestellte Wärmeübertrager und/oder die Rohre, der zumindest eine Rohrboden 7, 8 und/oder der Gehäusemantel sind zumindest bereichsweise oder vollständig aus Metall, insbesondere aus Aluminium, Stahl, wie beispielsweise aus Edelstahl, oder aus Kunststoff oder aus Keramik oder aus einem Faserverbundwerkstoff ausgebildet.

Der Wärmetauscher weist zumindest ein Bypassrohr auf. Das Bypassrohr ist zumindest bereichsweise oder vollständig aus Metall, insbesondere aus Aluminium, Stahl, wie beispielsweise aus Edelstahl, oder aus Kunststoff oder aus Keramik oder aus einem Faserverbundwerkstoff ausgebildet. Das Bypassrohr dient zum Bypassen von Medium, insbesondere Abgas, Ladeluft, Öl, Kühlmittel oder Kältemittel wie beispielsweise CO2, das nicht gekühlt werden soll. Das Bypassrohr ist in den Wärmeübertrager integriert und/oder einteilig mit dem Wärmeübertrager ausgebildet. In einem anderen Ausführungsbeispiel ist das Bypassrohr nicht einteilig mit dem Wärmeübertrager ausgebildet und leitet das Medium, insbesondere Abgas, Ladeluft, Öl, Kühlmittel oder Kältemittel, am Wärmeübertrager vorbei.

## Patentansprüche

1. Wärmeübertrager (1, 17), insbesondere Abgaswärmeübertrager für Kraftfahrzeuge, mit von einem Gas durchströmbaren Rohren (3, 18), welche in einem Gehäusemantel (2, 21) angeordnet und von einem flüssigen Kühlmittel umströmbar sind, wobei die Rohre (3, 18) Rohrenden aufweisen, die von Rohrböden (7, 8; 19, 20) aufgenommen werden, wobei die Rohre als Flachrohre (3, 18) ausgebildet sind, wobei die Rohrenden (3a, 3b; 18a) an mindestens einer Seite der Rohre (3, 18) zu einem etwa rechteckförmigen Querschnitt aufgeweitet und mit den Rohrböden (7, 8, 19) verlötet sind, wobei die Rohrenden (3a, 3b, 18a) Längsseiten (3c, 3d) aufweisen, welche nebeneinander und aneinander liegend angeordnet sind, wobei der mindestens eine Rohrboden (7, 8, 19) als Tiefziehteil mit einem umlaufenden Rahmen (7b, 8b) und Aufnahmeöffnungen (7a, 8a) für die aufgeweiteten Rohrenden (3a, 3b, 18a) ausgebildet ist, und wobei die Aufnahmeöffnungen als rechteckförmige Durchzüge (7a, 8a) ausgebildet sind, welche in die aufgeweiteten Rohrenden (3a, 3b, 18a) gesteckt sind.

2. Wärmeübertrager (1, 17) nach Anspruch 1, **dadurch gekennzeichnet, dass** die Rohrböden (7, 8, 19, 20) mit dem Gehäusemantel (2, 21) verlötet sind.

3. Wärmeübertrager (1, 17) nach Anspruch 1 oder 2, **dadurch gekennzeichnet, dass** die Rohre (11, 12) als geschweißte Rohre mit mindestens einer Längsnaht (11a, 12a, 12b) ausgebildet sind.

4. Wärmeübertrager (1, 17) nach einem der Ansprüche 1 oder 2, **dadurch gekennzeichnet, dass** die Rohre (13, 14, 15, 16) als gelötete Rohre ausgebildet sind und mindestens eine Längsverbindungsnaht (13a, 14a, 14b, 15a, 16a, 16b) aufweisen.

5. Wärmeübertrager (1, 17) nach einem der Ansprüche 1 bis 4, **dadurch gekennzeichnet, dass** in die Rohre (22) Einrichtungen zur Verbesserung des Wärmeüberganges, insbesondere Turbulenzeinlagen oder Innenwellrippen (23) eingeschoben und mit den Rohren verlötet sind.

6. Wärmeübertrager (1, 17) nach einem der Ansprüche 1 bis 5, **dadurch gekennzeichnet, dass** die Rohre (3, 18, 12, 16) eingeformte Strukturelemente, insbesondere Winglets aufweisen.

7. Wärmeübertrager (17) nach einem der Ansprüche 1 bis 6, **dadurch gekennzeichnet, dass** die nicht aufgeweiteten Rohrenden (18b) von einem einschiebbaren Rohrboden (20) aufgenommen werden.

8. Wärmeübertrager (1, 17) nach einem der Ansprüche 1 bis 7, **dadurch gekennzeichnet, dass** in Strömungsrichtung vor und hinter den Rohrböden (7, 8, 19, 20) Anschlussstutzen, ein Eintrittsdiffusor (9) und ein Austrittsstutzen (10) angeordnet sind, welche mit den Rohrböden (7, 8) und/oder dem Gehäusemantel (2, 21) verlötet sind.

9. Verfahren zur Herstellung eines Wärmeübertragers (1, 17) nach einem der vorhergehenden Ansprüche, **dadurch gekennzeichnet, dass**
- die Flachrohre (3, 18) endseitig aufgeweitet und zu einem Rohrbündel kassettiert werden,
- dass über die aufgeweiteten Rohrenden (3a, 3b, 18a) die Rohrböden (7, 8, 19) geschoben werden,
- dass das Rohrbündel und die Rohrböden (7, 8, 19, 20) in dem Gehäusemantel (2, 21) positioniert werden,
- dass Anschlussstutzen mit dem Gehäusemantel (2, 21) und/oder den Rohrböden (7, 8, 19, 20) positioniert und fixiert werden und
- dass der gesamte Wärmeübertrager (1, 17) vorzugsweise in einem Arbeitsgang gelötet wird.

10. Verfahren nach Anspruch 9, **dadurch gekennzeichnet, dass** in die Flachrohre (3, 18) über die aufgeweiteten Rohrenden (3a, 3b, 18a) Turbulenzeinlagen oder Innenwellrippen (23) eingeschoben und abschließend mitgelötet werden.

## Claims

1. A heat exchanger (1, 17), in particular an exhaust gas heat exchanger for motor vehicles, having tubes (3, 18) which can be traversed by a gas and which are arranged in a housing casing (2, 21) and around which a liquid coolant can flow, wherein the tubes (3, 18) have tube ends which are held by tube plates (7, 8; 19, 20), wherein the tubes are embodied as flat tubes (3, 18), wherein the tube ends (3a, 3b; 18a) are flared, at least at one side of the tubes (3, 18), to form an approximately rectangular cross section and soldered to the tube plates (7, 8, 19), wherein the tube ends (3a, 3b, 18a) have longitudinal sides (3c, 3d) which are arranged so as to lie adjacent to and abutting one another, wherein the at least one tube plate (7, 8, 19) is embodied as a deep-drawn part with an encircling frame (7b, 8b) and holding openings (7a, 8a) for the flared tube ends (3a, 3b, 18a), and wherein the holding openings are embodied as rectangular rim holes (7a, 8a) which are plugged into the flared tube ends (3a, 3b, 18a).

2. The heat exchanger (1, 17) as claimed in claim 1, **characterised in that** the tube plates (7, 8, 19, 20) are soldered to the housing casing (2, 21).

3. The heat exchanger (1, 17) as claimed in claim 1 or 2, **characterised in that** the tubes (11, 12) are embodied as welded tubes with at least one longitudinal seam (11a, 12a, 12b).

4. The heat exchanger (1, 17) as claimed in one of claims 1 or 2, **characterised in that** the tubes (13, 14, 15, 16) are embodied as soldered tubes and have at least one longitudinal connecting seam (13a, 14a, 14b, 15a, 16a, 16b).

5. The heat exchanger (1, 17) as claimed in one of claims 1 to 4, **characterised in that** devices for improving the heat transfer, in particular turbulence inserts or internal corrugated fins (23), are inserted into the tubes (22) and soldered to the tubes.

6. The heat exchanger (1, 17) as claimed in one of claims 1 to 5, **characterised in that** the tubes (3, 18, 12, 16) have integrally formed structural elements, in particular winglets.

7. The heat exchanger (17) as claimed in one of claims 1 to 6, **characterised in that** the non-flared tube ends (18b) are held by an insertable tube plate (20).

8. The heat exchanger (1, 17) as claimed in one of claims 1 to 7, **characterised in that** connecting pieces, an inlet diffuser (9) and an outlet diffuser (10), which are soldered to the tube plates (7, 8) and/or to the housing casing (2, 21), are arranged in the flow direction upstream and downstream of the tube plates (7, 8, 19, 20).

9. A method for producing a heat exchanger (1, 17) as claimed in one of the preceding claims, **characterised in that**
- the flat tubes (3, 18) are flared at the end side and are bundled to form a tube bundle,
- that the tube plates (7, 8, 19) are pushed over the flared tube ends (3a, 3b, 18a),
- that the tube bundle and the tube plates (7, 8, 19, 20) are positioned in the housing casing (2, 21),
- that connecting pieces are positioned with and fixed to the housing casing (2, 21) and/or the tube plates (7, 8, 19, 20), and
- that the entire heat exchanger (1, 17) is preferably soldered in one working step.

10. The method as claimed in claim 9, **characterised in that** turbulence inserts or internal corrugated fins (23) are inserted into the flat tubes (3, 18) via the flared tube ends (3a, 3b, 18a) and are finally co-soldered.

## Revendications

1. Echangeur de chaleur (1, 17), en particulier échangeur de chaleur de gaz d'échappement pour des véhicules automobiles, ledit échangeur de chaleur comprenant des tubes (3, 18) pouvant être traversés par un gaz, tubes qui sont disposés dans une enveloppe de carter (2, 21) et entourés par un moyen de refroidissement liquide, où les tubes (3, 18) présentent des extrémités tubulaires qui sont logées par des plateaux à tubes (7, 8; 19, 20), où les tubes sont configurés comme des tubes plats (3, 18), où les extrémités tubulaires (3a, 3b; 18a) sont élargies au niveau d'au moins un côté des tubes (3, 18), pour former une section de forme à peu près rectangulaire, et brasées avec les plateaux à tubes (7, 8, 19), où les extrémités tubulaires (3a, 3b, 18a) présentent des grands côtés (3c, 3d) qui sont disposés en se trouvant les uns à côté des autres et les uns contre les autres, où le plateau à tubes (7, 8, 19) au moins au nombre de un est configuré comme une pièce usinée par emboutissage profond et comprenant un cadre périphérique (7b, 8b) et des ouvertures de logement (7a, 8a) pour les extrémités tubulaires élargies (3a, 3b, 18a), et où les ouvertures de logement sont configurées comme des passages (7a, 8a) de forme rectangulaire, passages qui sont emboîtés dans les extrémités tubulaires élargies (3a, 3b, 18a).

2. Echangeur de chaleur (1, 17) selon la revendication 1, **caractérisé en ce que** les plateaux à tubes (7, 8, 19, 20) sont brasés avec l'enveloppe de carter (2, 21).

3. Echangeur de chaleur (1, 17) selon la revendication 1 ou 2, **caractérisé en ce que** les tubes (11, 12) sont configurés comme des tubes soudés ayant au moins une soudure longitudinale (11a, 12a, 12b).

4. Echangeur de chaleur (1, 17) selon l'une des revendications 1 ou 2, **caractérisé en ce que** les tubes (13, 14, 15, 16) sont configurés comme des tubes brasés et présentent au moins un cordon de soudure longitudinale (13a, 14a, 14b, 15a, 16a, 16b).

5. Echangeur de chaleur (1, 17) selon l'une quelconque des revendications 1 à 4, **caractérisé en ce que** des dispositifs servant à l'amélioration de la transmission de chaleur, en particulier des pièces intercalaires générant des turbulences ou bien des ailettes ondulées intérieures (23), sont insérés dans les tubes (22) et brasés avec les tubes.

6. Echangeur de chaleur (1, 17) selon l'une quelconque des revendications 1 à 5, **caractérisé en ce que** les tubes (3, 18, 12, 16) présentent des éléments de structure moulés, en particulier des winglets.

7. Echangeur de chaleur (17) selon l'une quelconque des revendications 1 à 6, **caractérisé en ce que** les extrémités tubulaires non élargies (18b) sont logées par un plateau à tubes (20) pouvant être inséré.

8. Echangeur de chaleur (1, 17) selon l'une quelconque des revendications 1 à 7, **caractérisé en ce que** des tubulures de raccordement, un diffuseur d'entrée (9) et une tubulure de sortie (10) sont disposés, dans la direction d'écoulement, en amont et en aval des plateaux à tubes (7, 8, 19, 20), lesquels éléments sont brasés avec les plateaux à tubes (7, 8) et / ou avec l'enveloppe de carter (2, 21).

9. Procédé de fabrication d'un échangeur de chaleur (1, 17) selon l'une quelconque des revendications précédentes, **caractérisé**
- **en ce que** les tubes plats (3, 18) sont élargis côté extrémité et superposés en couches pour former un faisceau de tubes,
- **en ce que** les plateaux à tubes (7, 8, 19) sont insérés par-dessus les extrémités tubulaires élargies (3a, 3b, 18a),
- **en ce que** le faisceau de tubes et les plateaux à tubes (7, 8, 19, 20) sont positionnés dans l'enveloppe de carter (2, 21),
- **en ce que** des tubulures de raccordement sont positionnées et fixées avec l'enveloppe de carter (2, 21) et / ou avec les plateaux à tubes (7, 8, 19, 20), et
- **en ce que** l'échangeur de chaleur (1, 17), dans sa totalité, est brasé de préférence en une seule opération.

10. Procédé selon la revendication 9, **caractérisé en ce que** des pièces intercalaires générant des turbulences ou bien des ailettes ondulées intérieures (23) sont insérées dans les tubes plats (3, 18) par-dessus les extrémités tubulaires élargies (3a, 3b, 18a) et, pour terminer, brasées avec lesdits tubes plats.
